# EUROPÄISCHE PATENTANMELDUNG

(11) **EP 1 228 834 A1**
(43) Veröffentlichungstag der Anmeldung: **07.08.2002**
(21) Anmeldenummer: 01810095.8
(22) Anmeldetag: 31.01.2001
(51) Int. Cl.: B23K 26/02, B23K 26/40, H02G 1/12, G02B 6/245

(54) **Vorrichtung für die Oberflächenbehandlung von beschichteten Elementen**

(71) Anmelder: Andersen, Svein, 6315 Oberägeri (CH)
(72) Erfinder: Andersen, Svein, 6315 Oberägeri (CH)
(74) Vertreter: Rutz, Peter

(57) **Zusammenfassung**

Die Vorrichtung dient zur Oberflächenbehandlung von beschichteten Elementen (3; 30; 300), insbesondere von Kabeln, deren Beschichtung (31, 310) mittels wenigstens zwei Laserdioden (1a, ..., 1h) abgetragen oder aufgetrennt wird. Die Laserdioden (1a, ..., 1h) sind auf einem Montagekörper (2; 5; 200) montiert und derart ausgerichtet oder können derart ausgerichtet und bewegt werden, dass die Beschichtung (31, 310) eines Elementes (3; 300) an einer vorgesehenen Stelle abgetragen oder aufgetrennt wird. Vorzugsweise wird ein hohlzylindrischer Montagekörper (2; 5; 200) verwendet, der mit einer ungeraden Anzahl von Laserdioden (1a, ..., 1h) bestückt wird, die gleichmässig über den Montagekörper (2; 5; 200) verteilt sind.

## Beschreibung

Die Erfindung betrifft eine Vorrichtung für die Oberflächenbehandlung von beschichteten Elementen, insbesondere für die Entfernung oder Auftrennung von Isolierschichten auf elektrischen oder optischen Leitern, nach dem Oberbegriff des Patentanspruchs 1.

Eine Vorrichtung, die zur Entfernung der Isolierschicht eines isolierten Leiters dient, ist in der US-Patentschrift No. 5,837,961 beschrieben. Diese Vorrichtung weist eine Lasereinheit hoher Leistung auf, deren Strahl über mehrere Spiegel abwechslungsweise an zwei einander gegenüberliegenden Seiten des Leiters auf eine zu entfernende Isolationsschicht geführt wird. Die Spiegel, die über Achsen, Stangen und Riemen mit einem Motor gekoppelt sind, werden dazu synchron angetrieben und zyklisch bewegt.

Diese bekannte Vorrichtung weist daher einen aufwendigen Antriebsmechanismus sowie verhältnismässig teure Spiegel auf, die zumindest bei der Herstellung präzise justiert und später regelmässig kontrolliert und gereinigt werden sollten.

Die Verwendung von zwei Strahlungspfaden erlaubt eine effizientere Entfernung der Isolationsschichten. Zur Erhöhung der Zahl der Zonen, an denen gleichzeitig Isolationsmaterial abgetragen wird, müsste das Spiegelsystem erweitert werden, was mit einem kaum mehr wirtschaftlich vertretbaren Aufwand verbunden wäre.

Weiterhin ist die Steuerbarkeit der bekannten Vorrichtung stark begrenzt. Sofern nur an einer Zone Isolationsmaterial abgetragen werden soll, muss einer der Strahlenpfade beispielsweise mechanisch unterbrochen oder der Spiegelantrieb auf einen ausgewählten Drehbereich beschränkt werden.

Der vorliegenden Erfindung liegt daher die Aufgabe zugrunde, eine kostengünstig herstellbare und weitgehend wartungsfreie Vorrichtung zu schaffen, die zu einer effizienten Oberflächenbehandlung von beschichteten Elementen geeignet ist.

Diese Aufgabe wird mit einer Vorrichtung gelöst, welche die in Anspruch 1 angegebenen Merkmale aufweist. Vorzugsweise Ausgestaltungen der Erfindung sind in weiteren Ansprüchen angegeben.

Die Vorrichtung, die zu einer Oberflächenbehandlung von beschichteten Elementen, insbesondere zum Auftrennen oder Abtragen von Isolationsschichten dient, weist wenigstens zwei Laserdioden als Laserquellen auf, die auf einem Montagekörper montiert und derart ausgerichtet oder ausrichtbar sind, dass die Beschichtung eines Elementes an einer vorgesehenen Stelle abtragbar oder auftrennbar ist.

Die Laserdioden werden auf einem stabilen Montagekörper montiert und derart ausgerichtet, dass ein in die Vorrichtung eingeführtes beschichtetes Element an den dazu vorgesehenen Zonen mit Laserstrahlen beaufschlagt werden kann, so dass die betreffende Zone durch die Lasereinwirkung vollständig entfernt oder aufgetrennt und mit einem weiteren Werkzeug bearbeitet werden kann. Beispielsweise wird eine zu entfernende Isolierschicht nahe dem Leiter- oder Kabelende aufgetrennt, dort durch ein Werkzeug mechanisch erfasst und anschliessend über das Endstück abgezogen. Möglich ist demgegenüber das Scannen bzw. Befahren der zu entfernende Isolierschicht mit Laserstrahlen bis sich die Schicht vollständig ablöst.

Besonders vorteilhaft ist dabei insbesondere, dass kein Spiegelsystem benötigt wird, da die Laserdioden auf dem Montagekörper derart ausgerichtet werden oder durch Drehung ausgerichtet werden können, dass die Laserstrahlen direkt und somit ohne Dämpfung den zu entfernenden Schichten zuführbar sind. Vorzugsweise ist der Montagekörper drehbar und/oder axial entlang dem zu bearbeitenden Element verschiebbar, so dass grössere Zonen bearbeitet werden können.

Die Bearbeitungsgeschwindigkeit, die von der abgegebenen Strahlungsleistung abhängig ist, kann durch die Verwendung einer grösseren Anzahl von Laserdioden erhöht werden, die auf verschiedene Stellen einer abzutragenden oder aufzutrennenden Schicht gleichzeitig einwirken.

Durch Abschaltung einzelner Laserdioden kann auch nur eine teilweise Entfernung oder Auftrennung von Schichten bewirkt werden.

Durch Abschaltung einzelner Laserdioden oder Reduktion der Leistung einzelner oder aller Laserdioden kann die Strahlungsleistung ferner den zu bearbeitenden Elementen und deren Beschichtungen, insbesondere den Schichtdicken angepasst werden.

Durch eine gezielte Ausrichtung der Laserdioden wird ferner verhindert, dass der Laserstrahl einer Laserdiode eine Schädigung einer benachbarten Laserdiode verursachen kann.

In einer vorzugsweisen Ausgestaltung der Erfindung erfolgt die Ausrichtung der Laserdioden zudem in Abhängigkeit der Abmessungen der zu bearbeitenden Elemente. Die Laserdioden werden vorzugsweise derart justiert, dass die Laserstrahlen tangential zu einem Kreis verlaufen, dessen Radius entsprechend der Lage und Abmessung der abzutragenden oder aufzutrennenden Beschichtung gewählt wird. Die Einstellung des Drehwinkels der Laserdioden erfolgt vorzugsweise in einfacher Weise mittels eines den Montagekörper umfassenden und relativ zu diesem drehbaren Ringes.

In einer weiteren vorzugsweisen Ausgestaltung ist der mit den Laserdioden bestückte Montagekörper derart gewählt, dass ebene Flächen eines Elementes, beispielsweise die mit Bauteilen zu bestückenden Seiten von Leiterplatten oder Flachbandkabel bearbeitet werden können.

Die Steuerung der Ausrichtung, Bewegung und des Betriebs der Laserdioden bzw. des Montagekörpers erfolgt vorteilhaft mittels eines Leitrechners, der gleichzeitig die Zufuhr und Positionierung der beschichteten Elemente und gegebenenfalls zur Bearbeitung der Elemente dienender Werkzeuge steuert.

Das Material des Montagekörpers und allfällige Montagemittel sind ferner vorzugsweise derart gewählt, dass die durch Verlustleistung erzeugte Wärme von den Laserdioden abgeführt wird. In einer vorzugsweisen Ausgestaltung weist der Montagekörper zudem Kühlrippen auf, mittels denen die Wärmeenergie an die Umgebungsluft, vorzugsweise an eine Luftströmung abgegeben wird, die gleichzeitig zum Abzug von Dämpfen und Partikeln dient, die bei der Bearbeitung der beschichteten Elementen entstehen können.

Nachfolgend wird die Erfindung anhand einer Zeichnung näher erläutert. Dabei zeigt :
- Fig. 1: den hohlzylindrischen Montagekörper 2 einer erfindungsgemässen Vorrichtung, der mit Laserdioden 1 bestückt wird und in den ein zu bearbeitendes Element 3 eingeführt ist,
- Fig. 2: den hohlzylindrischen Montagekörper 2 gemäss Fig. 1 mit acht darin eingesetzten Laserdioden 1a, ..., 1h,
- Fig. 3: einen Montagekörper 2a mit neun montierten Laserdioden 1a, ..., 1j, deren Strahlen auf der gegenüberliegenden Seite nicht auf eine Laserdiode 1a; ..., 1j auftreffen können,
- Fig. 4: einen Montagekörper 2b mit acht gleichmässig verteilt, jedoch geneigt montierten Laserdioden 1a, ..., 1h,
- Fig. 5: einen im Schnitt gezeigten Montagekörper 5 mit drehbar gelagerten Laserdioden 1a, ..., 1h und einem den Montagekörper 5 umfassenden Ring 6 zur Justierung des Neigungswinkels δ der Laserdioden 1a, ..., 1h,
- Fig. 6: den Montagekörper 5 und den Ring 6 mit zugehörigen Antriebsmitteln 7 und 8 im Schnitt entlang der Linie A-A von Fig. 5,
- Fig. 7: den Montagekörper 5 und den Ring 6 von Fig. 5 und Fig. 6 derart gegeneinander gedreht, dass die Strahlungsachsen der Laserdioden 1a, ..., 1h tangential zur Oberfläche eines Elementes 30 verlaufen,
- Fig. 8: den Montagekörper 5 und den Ring 6 von Fig. 5 mit einer Vorrichtung 10 zur axialen Verschiebung und mit einer Steueranlage 100, 101,
- Fig. 9: einen längsförmigen Montagekörper 200 mit parallel zu einander ausgerichteten Laserdioden 1a, ..., 1d, mittels denen eine ebene Fläche eines beschichteten Elementes 300 bearbeitet wird,
- Fig. 10: eine erfindungsgemässe Vorrichtung in verschiedenen Phasen während der Bearbeitung eines Elementes 3,
- Fig. 11: eine erfindungsgemässe Vorrichtung mit einem erweiterten Montagekörper 20, der zum Aufbringen von Längsschlitzen und quer verlaufenden Ringschlitzen geeignet ist und
- Fig. 12: eine erfindungsgemässe Vorrichtung mit einem erweiterten Montagekörper 2000 mit in axialer Richtung nebeneinander angeordneten Laserdioden 1.

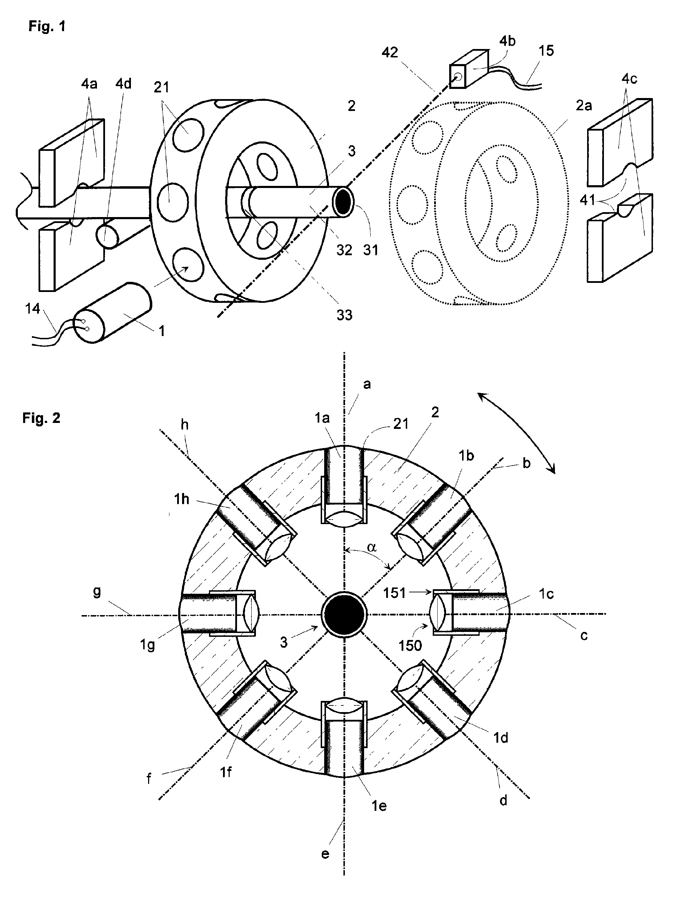

Fig. 1 zeigt in schematischer Darstellung die wesentlichen Teile der erfindungsgemässen Vorrichtung, die zur Oberflächenbehandlung von beschichteten Elementen, insbesondere für die Entfernung oder Auftrennung von Isolierschichten auf elektrischen oder optischen Leitern dient. Gezeigt ist ein hohlzylindrischer Montagekörper 2 mit annähernd radial verlaufenden Öffnungen 21, in die Laserdioden 1 derart eingesetzt werden können, dass abgegebene Laserstrahlung auf ein in den Montagekörper 2 eingeführtes Element 3 auftrifft, das einen optischen oder elektrischen Leiter 31 und wenigstens eine diesen Leiter 31 umfassende Isolationsschicht 32 aufweist.

Mittel, wie Rollen, Bänder, Greifwerkzeuge und Sensoren, zur Förderung und Positionierung der zu bearbeitenden Elemente sind dem Fachmann beispielsweise aus der U.S. Patentschrift 5,522,130 bekannt, die eine Vorrichtung zur Positionierung von Leitern bzw. Drähten und Kabeln beschreibt. Die Position des zu bearbeitenden Elementes wird darin mittels einer Laservorrichtung gemessen. Die Auftrennung der Isolationsschicht hingegen erfolgt mittels eines Schneidewerkzeugs.

In Fig. 1 sind eine zangenförmige Förder- und Haltevorrichtung 4a, eine Stützrolle 4d sowie eine Messvorrichtung 4b gezeigt, welche zur Positionierung des eingeführten Elementes 3 dienen. Gezeigt ist ferner eine Trennstelle 33, an der die Isolationsschicht 32 aufgetrennt ist und von einem Werkzeug 4c erfasst und abgezogen werden kann. Das Werkzeug 4c weist zu diesem Zweck zwei Klemmenteile auf, die mit einer an das Element 3 angepassten Ausnehmung 41 versehen sind.

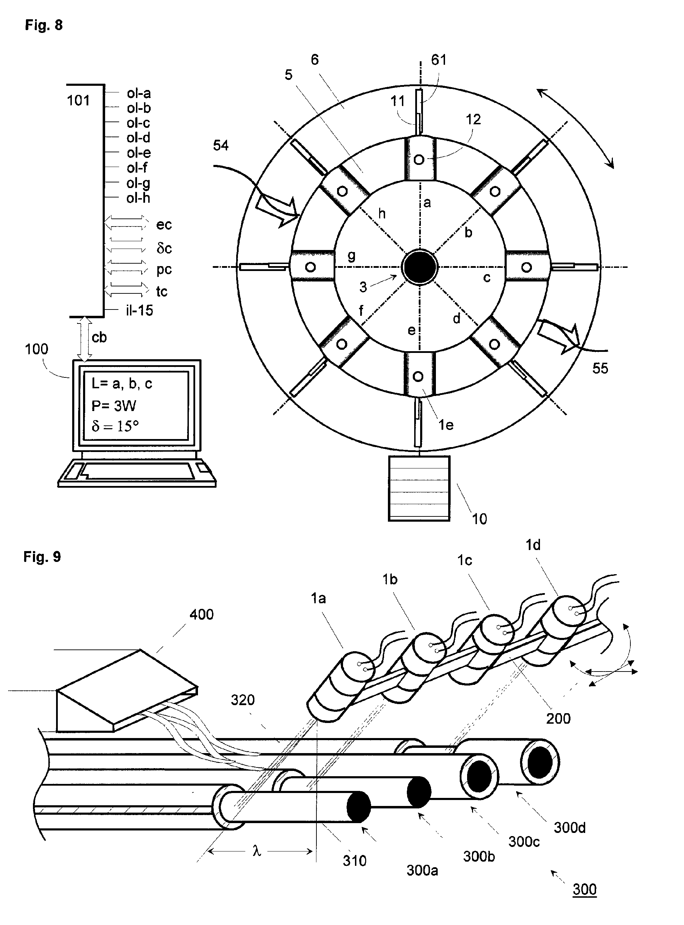

Die Messvorrichtung 4b und die Laserdioden 1 sind mit Anschlussleitungen 14, 15 versehen, die beispielsweise an die in Fig. 8 gezeigte Steuervorrichtung 100, 101 angeschlossen werden.

Die Laserdioden 1 weisen vorzugsweise Leistungen im Bereich von 1 Watt bis 5 Watt auf und sind in entsprechender Anzahl vorhanden. Durch die Verwendung von mehreren Laserdioden kann nicht nur die Leistung der einzelnen Laserdioden gesenkt werden. Zusätzlich kann eine Linie oder eine Fläche präziser und schneller abgetastet werden. Vorteilhaft ist beispielsweise die Verwendung von etwa zehn Laserdioden, je mit einer Leistung von 1 - 2 Watt. Laserdioden dieser Leistungsklasse sind beispielsweise von Laser Diode Incorporated erhältlich (siehe: www.laserdiode.com).

Ferner sind Mittel (siehe Fig. 6, Ring 6 und Antriebsräder 7, 8) vorgesehen, mittels denen der Montagekörper 2 gehalten und gedreht werden kann.

Fig. 2 zeigt den hohlzylindrischen Montagekörper 2 von Fig. 1 mit acht darin eingesetzten Laserdioden 1a, ..., 1h, die gleichmässig über den Montagekörper 2 verteilt und radial nach innen gegen dessen Längsachse ausgerichtet sind, entlang der das zu bearbeitende Element 3 eingeführt wurde. In die Öffnungen 21 sind ferner Halterungen 151 mit einem vorzugsweise aus einer einzelnen Linse 150 bestehenden Linsensystem derart eingesetzt, dass die von den Laserdioden 1a, ..., 1h abgegebenen Laserstrahlen mittels den Linsensystemen fokussiert werden bzw. fokussiert werden können. Vorzugsweise weist jede Öffnung 21 ein Gewinde auf, in das eine ebenfalls mit einem Gewinde versehene Halterung 151 soweit eingedreht werden kann, bis der Laserstrahl unter Berücksichtigung eines zu bearbeitenden Elementes fokussiert ist. Die Linsensysteme werden vorzugsweise bei allen beschriebenen und gezeigten Ausgestaltungen der Erfindung eingesetzt.

Beim Betrieb der Vorrichtung mit dem Montagekörper 2 von Fig. 2 treffen die Laserstrahlen senkrecht auf die Oberfläche des zu bearbeitenden Elementes 3 auf. Sofern die Laserdioden 1a, ..., 1h eingeschaltet werden, ohne dass das zu bearbeitende Element 3 eingeführt wurde, können die Laserstrahlen in eine benachbarte Laserdiode 1a; ...; 1h eindringen und diese zerstören. Die Laserdioden 1a, ..., 1h werden daher vorzugsweise gegeneinander verschoben oder gedreht bzw. geneigt, bis eine gegenseitige Beeinträchtigung der Laserdioden 1a, ..., 1h vermieden wird.

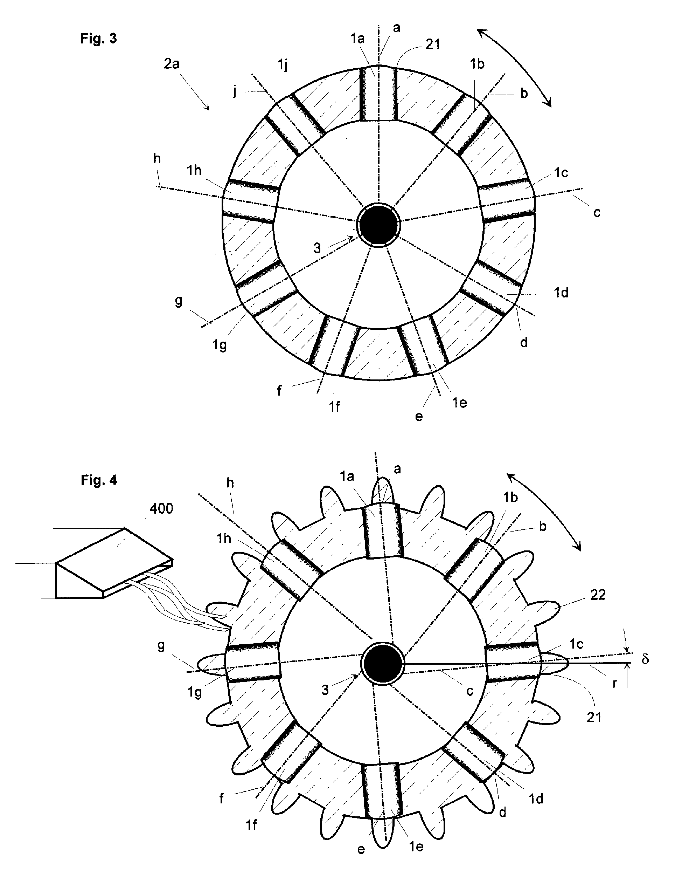

Besonders vorteilhaft ist die in Fig. 3 gezeigte Anordnung mit einer ungeraden Anzahl (im vorliegenden Fall neun) Laserdioden 1a, ..., 1j, die gleichmässig über den Montagekörper 2a verteilt werden können, ohne dass eine gegenseitige Störung entsteht. Eine gleichmässige Verteilung der Strahlungsenergie auf die Oberfläche des zu bearbeitenden Elementes 3 während dem Betrieb der Vorrichtung bleibt dadurch gewährleistet.

Fig. 4 zeigt einen Montagekörper 2b mit acht gleichmässig verteilt, jedoch geneigt montierten Laserdioden 1a, ..., 1h. Auch bei dieser Anordnung wird eine gegenseitige Störung der Laserdioden 1a, ..., 1h vermieden. Die Öffnungen oder Bohrungen 21 im Montagekörper 2b sind entsprechend angewinkelt vorgesehen, so dass die Laserstrahlen geneigt um den Winkel δ relativ zum Radius r durch die Drehachsen der Laserdioden 1a, ..., 1h verlaufen. Der Winkel δ ist dabei derart gewählt, dass ein mögliches Auftreffen von Laserstrahlen einer Laserdiode 1a; ...; 1h auf einer benachbarten Laserdiode 1a; ...; 1h vermieden wird.

Der Montagekörper 2b ist ferner mit Kühlrippen 22 versehen, mittels denen die von den Laserdioden 1a, ..., 1h erzeugte Wärmeenergie an die Umgebungsluft abgeführt werden kann. Die Wärmeenergie wird vorzugsweise an eine von einer Vakuumeinheit 400 erzeugte Luftströmung abgegeben, die gleichzeitig zum Abzug von Dämpfen und Partikeln dient, die bei der Bearbeitung der beschichteten Elementen entstehen können. Vorzugsweise wird die Vakuumeinheit 400 daher zumindest zeitweise auch dann betrieben, nachdem der Laserbetrieb bereits abgeschlossen wurde.

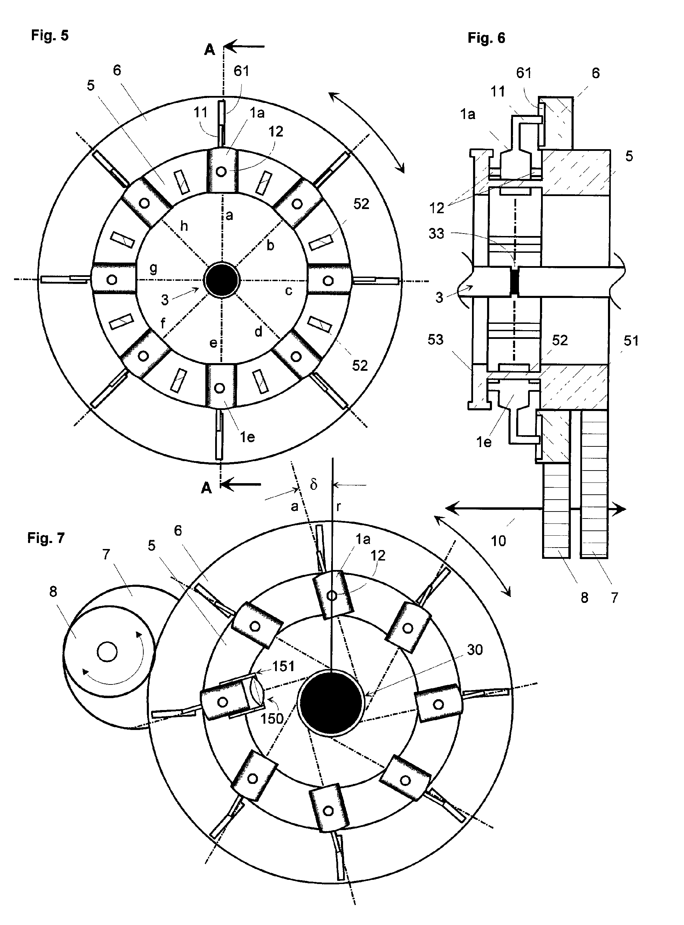

In Fig. 5 ist ein Montagekörper 5 gezeigt, in dem acht Laserdioden 1a, ..., 1h drehbar gelagert sind. Aus Fig. 6, die den Montagekörper 5 in Schnittdarstellung (Schnitt entlang Linie A-A von Fig. 5) zeigt, ist ersichtlich, dass der Montagekörper 5 aus zwei über Verbindungselemente 52 miteinander verbundenen hohlzylindrischen Elementen 51, 53 besteht, zwischen denen die Laserdioden 1a, ..., 1h drehbar gelagert sind. Die Laserdioden 1a, ..., 1h sind dazu mit entlang der Drehachse ausgerichteten Wellen 12 versehen, die in die hohlzylindrischen Elemente 51, 53 eingefügt sind. Die Laserdioden 1a, ..., 1h weisen an den radial aussen liegenden Enden einen Hebel 11 auf, der in einer Nut 61 eines Ringes 6 geführt ist, der den Montagekörper 5 umfasst und relativ zu diesem drehbar ist. Beispielsweise ist der Ring 6 mittels eines Gewindes mit dem Montagekörper 5 verbunden. Beim Drehen des Ringes 6 relativ zum Montagekörper 5 wird der Hebel 11 jeder Laserdiode 1a; ...; 1h durch die zugehörige Nut 11 in die entsprechende Richtung gezogen, wodurch sich ein gewünschter Winkel δ einstellt, um den jede Laserdiode 1a; ...; 1h gedreht wird.

In der Anordnung von Fig. 7 sind der Montagekörper 5 und der Ring 6 derart gegeneinander gedreht, dass die Achsen a, ..., h der Laserdioden 1a, ..., 1h tangential zur Oberfläche eines zu bearbeitenden Elementes 30 verlaufen.

Zum Antrieb von Montagekörper 5 und Ring 6 sind vorzugsweise gesteuerte Vorrichtungen 7, 8 vorgesehen, mittels denen eine gewünschte Drehung des Montagekörpers 5 bei mitdrehendem Ring 6 oder nur eine Drehung des Ringes 6 bewirkt werden kann, wodurch ein entsprechend dem zu beschichteten Element 30 gewählter Neigungswinkel δ einstellbar ist. Ein Oberflächenbereich des Elementes 30 kann daher durch Drehung der Laserdioden 1a, ..., 1h oder bei konstant gehaltenem Neigungswinkel δ durch Drehung des Montagekörpers 5 (bei mitdrehendem Ring 6) abgetastet bzw. mit den Laserstrahlen bearbeitet werden. Vorzugsweise ist eine weitere Antriebsvorrichtung 10 vorgesehen, durch die der Montagekörper 5 axial entlang dem Element 3, 30 verschiebbar ist, so dass flächige Zonen von den Laserstrahlen überdeckt werden können.

Wie in Fig. 8 gezeigt, werden die Antriebsvorrichtungen 7, 8 und 10 vorzugsweise von einem Rechner 100 gesteuert, der über einen Steuerbus cb mit einer Treibereinheit 101 verbunden ist. Die Treibereinheit 101 ist über Ausgangsleitungen ol-a, ..., ol-h mit Laserdioden 1a, ..., 1h und über eine Eingangsleitung il-15 ferner mit der Messvorrichtung 4b verbunden. Eine mögliche elektrische Beschaltung einer Laserdiode ist beispielsweise in J.D. Gibson, THE COMMUNICATIONS HANDBOOK, CRC Press LLC, Boca Raton 1997, Seite 777 gezeigt. Die Treibereinheit 101 ist ferner über einen Steuerbus δc mit den Antrieben 7, 8 zur Einstellung des Winkels δ und zur Drehung des Montageringes 5, über einen Steuerbus pc mit dem Antrieb 10 zur axialen Verschiebung des Montageringes 5, über einen Steuerbus ec mit den zur Förderung und Positionierung der Elemente 3, 30 dienenden Antrieben sowie über einen Steuerbus tc mit Werkzeugen 4c verbunden, mittels denen die Elemente 3, 30 bearbeitet werden können.

Auf dem Bildschirm des in Fig. 8 gezeigten Rechners ist erkennbar, dass die Laserdioden 1a, 1b und 1c ausgewählt und mit einer Leistung von 3 Watt betrieben werden sollen. Der Neigungswinkel δ soll auf 15° eingestellt werden. Möglich ist ferner, dass der Durchmesser eines Elementes 3 mittels der Messvorrichtung 4b erfasst und der Neigungswinkel δ entsprechend eingestellt wird. Ferner kann vorgesehen sein, dass die Laserdioden 1a, ..., 1h nur eingeschaltet werden können, wenn ein beschichtetes Element 3 in die Vorrichtung eingeführt wurde.

Zur Vermeidung hoher Betriebstemperaturen kann dem Montagekörper 5 ferner ein Kühlmedium über Ein- und Ausgangsleitungen 54, 55 zugeführt werden.

Fig. 9 zeigt einen längsförmigen Montagekörper 200 mit parallel zu einander ausgerichteten Laserdioden 1a, ..., 1d, mittels denen eine ebene Fläche eines beschichteten Elementes 300 bzw. des gezeigten Flachbandkabels segmentweise bearbeitet wird. Die Laserdioden 1a, 1b und 1d sind eingeschaltet und haben Segmente einer Isolationsschicht 320 abgetragen und die darunter liegenden metallischen Leiter 300a, 300b und 300c teilweise freigelegt. Die Laserdioden 1a, ..., 1d sind vom Montagekörper 200 vorzugsweise in einer Ebene führbar und ferner in einem gewünschten Winkel λ drehbar, so dass die Laserstrahlen mit verbesserter Wirkung schräg auf die Oberfläche des Elementes 300, beispielsweise auf eine Leiterplatte auftreffen. Abgelöste Teile werden vorzugsweise von einer Vakuumeinheit 400 abgesaugt, um störende Verunreinigungen zu vermeiden.

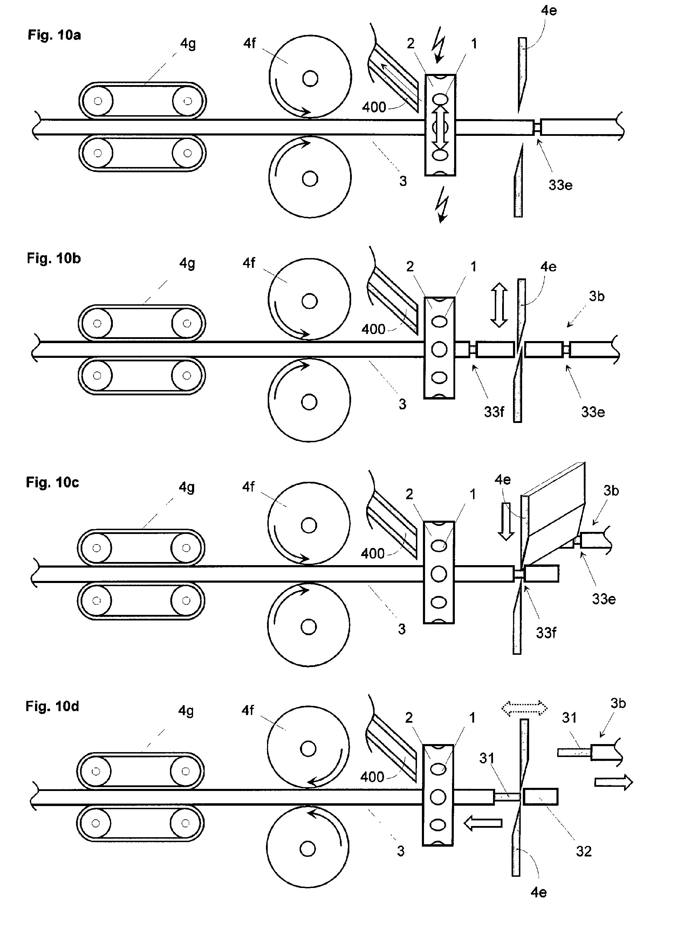

Fig. 10 zeigt eine erfindungsgemässe Vorrichtung in verschiedenen Phasen während der Bearbeitung eines mit einer Isolationsschicht 32 versehenen Kabels 3. Bei dem gezeigten, vorzugsweisen Bearbeitungsprozess werden Kabelstücke 3b mit beidseitig abisolierten Enden erzeugt.

In Fig. 10a ist gezeigt, dass bereits eine erste Trennstelle 33e erzeugt und das Kabel 3 mittels einer Fördervorrichtung 4g weiter geschoben und wieder angehalten wurde. In der gezeigten Position sind die Laserdioden 1 während des Drehens des Montagekörpers aktiv, so dass eine zweite Trennstelle 33f erzeugt wird. Entstehende Dämpfe und abgelöste Partikel werden von einer Vakuumeinheit 400 abgesaugt. Die präzise Verschiebung des Kabels 3 erfolgt mittels einer Messvorrichtung 4f, die mit einem zur Steuerung der Fördervorrichtung 4g dienenden Leitrechner 100 (siehe Fig. 8) verbunden ist.

Fig. 10b zeigt die Vorrichtung nachdem das Kabel 3 bis zu der Stelle weiter verschoben wurde, an der zwei gegeneinander gerichtete Klingen eines Kombinationswerkzeugs 4e exakt zwischen den erzeugten Trennstellen 33e, 33f liegen, so dass ein Kabelstück 3b mittels eines Schervorgangs abgetrennt werden kann.

Fig. 10c zeigt die Vorrichtung, nachdem das Kabel 3 soweit vor und das Kabelstück 3b soweit zurück verschoben wurde, bis die Trennstellen 33e und 33f bei den Klingen des Kombinationswerkzeugs 4e anliegen. Ferner wurden die Klingen, ohne den metallischen Leiter 31 zu verletzen, soweit gegeneinander verschoben, dass die abgetrennten Isolationsschichten gehalten werden, währenddem das Kabel 3, wie in Fig. 10d gezeigt, wieder weggezogen wird, wodurch der metallische Leiter 31 an den betreffenden Enden des Kabels 3 freigelegt wird.

Möglich sind natürlich weitere Ausgestaltungen der Erfindung. Beispielsweise kann das Kombinationswerkzeug 4e in Förderrichtung verschiebbar gelagert sein, so dass das Entfernen der abgelösten Isolationsstücke durch eine Verschiebung des Kombinationswerkzeugs 4e erfolgen kann und das entsprechende Vor- und Zurückziehen des Kabels 3 und abgetrennter Kabelstücke 3b entfällt. Möglich ist ferner die Verwendung von zwei oder mehreren mit Laserdioden 1 versehenen Montagekörpern 2, die vorzugsweise in Förderrichtung des Kabels 3 an frei wählbaren Positionen montierbar sind.

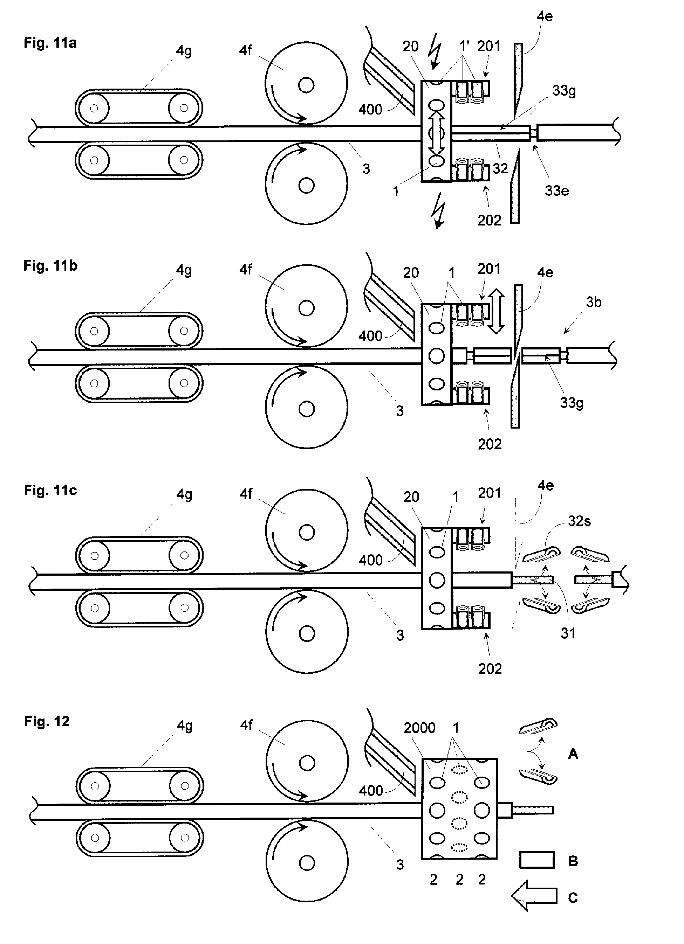

Zum Halten und Stützen des Kabels 3 und abgetrennter Kabelstücke 3b sind bedarfsweise Stütz- und Halteelemente vorgesehen (siehe Fig. 1). Fig. 11 zeigt eine erfindungsgemässe Vorrichtung mit einem erweiterten Montagekörper 20, der zum Aufbringen von Längsschlitzen 33g und quer verlaufenden Ringschlitzen 33e, 33f in der Isolationsschicht 32 eines Kabels 3 geeignet ist.

Ein abzutrennender Teil der Isolationsschicht 32 wird daher beim Verschieben des Kabels 3 mit einem oder mehreren, vorzugsweise mit zwei Längsschlitzen 33g versehen. Anschliessend wird das Kabel 3 angehalten und wie in Fig. 11a gezeigt, durch Drehen des Montageringes 20 bei aktivierten Laserdioden 1 mit einem Ringschlitz 33f versehen. Nach dem in Fig. 11b gezeigten Abtrennen des vorlaufenden Kabelstücks 3b fallen die resultierenden Isolationsschalen 32s selbständig ab oder werden manuell oder maschinell abgelöst (siehe Fig. 11c).

Zur Erhöhung der Intensität der Laserstrahlung, weist der Montagekörper wenigstens einen Strang 1' von Laserdioden 1 auf, die in axialer Richtung hintereinander angeordnet sind und die bei der Längsverschiebung des Kabels 3 durch die Steuereinheit 100 vorzugsweise separat einschaltbar sind, so dass der Längsschlitz 33g in erforderlicher Tiefe geschaffen werden kann. Die zusätzlichen Stränge 1' von Laserdioden 1 können auf Trägerelementen 201, 202 des Montagekörpers 20 angeordnet sein.

Wie in Fig. 12 gezeigt, ist jedoch auch die Verwendung eines erweiterten Montagekörpers 2000 möglich, auf dem nebst einem ersten Ring von Laserdioden 1 einer oder mehrere weitere Laserdiodenringe oder einer oder mehrere axial ausgerichtete Stränge von Laserdioden 1 angeordnet sind. Der erweiterte Montagekörper 2000 kann aus einem Stück geschaffen oder aus zwei oder mehreren einfachen Montagekörpern 2 gebildet werden, die miteinander verbunden sind. Durch entsprechende Steuerung der einzelnen Laserdioden 1 und des erweiterten Montagekörpers 2000 können, A, Schalenstücke oder ,B ,ungeteilte Hülsenstücke abgetrennt werden oder, C, grössere Elemente (Fenster, Hülsen) von Isolationsschichten gänzlich abgetragen oder aufgelöst werden.

## Patentansprüche

1. Vorrichtung zur Oberflächenbehandlung von beschichteten Elementen (3; 30; 300), insbesondere von Kabeln, deren Beschichtung (32, 320) mittels wenigstens einer Laserquelle abtragbar oder auftrennbar ist, **dadurch gekennzeichnet, dass** wenigstens zwei Laserdioden (1a, ..., 1h) als Laserquellen verwendet werden, die auf einem Montagekörper (2; 5; 20; 200; 2000) montiert und derart ausgerichtet oder ausrichtbar sind, dass die Beschichtung (32, 320) eines Elementes (3; 300) an einer vorgesehenen Stelle abtragbar oder auftrennbar ist.

2. Vorrichtung nach Anspruch 1, **dadurch gekennzeichnet, dass** die Laserdioden (1a, ..., 1h) auf einem längsförmigen Montagekörper (200) montiert und parallel zu einander ausgerichtet sind oder dass der Montagekörper (2; 20; 2000), in den zu bearbeitende Elemente (3; 30) axial einführbar sind, hohlzylindrisch ausgestaltet und mit zur Aufnahme der Laserdioden (1a, ..., 1h) dienenden Öffnungen (21) versehen ist.

3. Vorrichtung nach Anspruch 1 oder 2, **dadurch gekennzeichnet, dass** gegebenenfalls justierbare Linsensysteme (150, 151) vorgesehen sind, mittels denen die von den Laserdioden (1a, ..., 1h) abgegebenen Strahlen fokussierbar sind.

4. Vorrichtung nach Anspruch 3, **dadurch gekennzeichnet, dass** die Linsensysteme (150, 151) Halterungen (150) aufweisen, die in die Öffnungen (21) des Montagekörpers (2; 20; 2000) eingeschraubt und dadurch justiert werden können.

5. Vorrichtung nach einem der Ansprüche 1-4, **dadurch gekennzeichnet, dass** die Öffnungen (21) vorzugsweise in ungerader Anzahl derart im oder entlang dem Montagekörper (2; 20; 2000) ausgerichtet bzw. angeordnet sind, dass die Strahlungsachsen (a, ..., h) der Laserdioden (1a, ..., 1h) nicht durch die Emissionsöffnung einer benachbarten Laserdiode (1a; ...; 1h) verlaufen.

6. Vorrichtung nach einem der Ansprüche 1-5, **dadurch gekennzeichnet, dass** die Laserdioden (1a, ..., 1h) in einem vorzugsweise hohlzylindrischen Montagekörper (5) drehbar gelagert und mittels eines den Montagekörper (5) umfassenden Ringes (6) vorzugsweise derart justierbar sind, dass die Laserstrahlen tangential zu einem Kreis verlaufen, dessen Radius entsprechend der Lage der abzutragenden oder aufzutrennenden Beschichtung einstellbar ist.

7. Vorrichtung nach Anspruch 6, **dadurch gekennzeichnet, dass** die Laserdioden (1a, ..., 1h) Hebel (11) aufweisen, die je in einer zugehörigen Nut (61) des Ringes (6) geführt sind.

8. Vorrichtung nach einem der Ansprüche 1 - 7, **dadurch gekennzeichnet, dass** der Montagekörper (20; 2000) erweitert, gegebenenfalls verbreitert oder mit Trägerelementen 201, 202 versehen ist, wobei in axialer Richtung wenigstens ein Strang (1') von Leuchtdioden (1) und/oder zwei oder mehrere Leuchtdiodenringe (1) angeordnet sind.

9. Vorrichtung nach einem der Ansprüche 2 - 8, **dadurch gekennzeichnet, dass** der Montagekörper (2; 5; 20; 200; 2000) drehbar und/oder axial verschiebbar gelagert ist und/oder dass die Laserdioden (1a, ..., 1h) drehbar gelagert sind, so dass mittels den Strahlen der Laserdioden (1a, ..., 1h) eine axial oder quer dazu verlaufende Linie oder eine Fläche bearbeitet werden kann.

10. Vorrichtung nach Anspruch 9, **dadurch gekennzeichnet, dass** Vorrichtungen oder Vorrichtungsteile (7, 8; 10) zum Drehen und/oder axialen Verschieben des Montagekörpers (2; 5; 20; 200; 2000) und/oder des Ringes (6) vorgesehen sind.

11. Vorrichtung nach einem der Ansprüche 1 - 10, **dadurch gekennzeichnet, dass** abzutragende oder aufzutrennende Schichten (32;320) mittels den Laserdioden (1a, ..., 1h) vollständig abtragbar oder nur soweit lösbar oder auftrennbar sind, dass sie mittels eines Werkzeugs (4c; 4e) mechanisch ablösbar sind.

12. Vorrichtung nach Anspruch 11, **dadurch gekennzeichnet, dass** das Werkzeug (4e) zwei Klingen aufweist die derart gegeneinander verschiebbar sind, dass ein beschichtetes Element (3; 300) durchgetrennt oder eine Schicht (32; 320) des beschichteten Elements (3; 300) gehalten werden kann.

13. Vorrichtung nach einem der Ansprüche 1 - 12, **dadurch gekennzeichnet, dass** eine Vakuumeinheit (400) vorgesehen ist, die zur Erzeugung eines Luftstroms geeignet ist, der zur Kühlung des gegebenenfalls mit Kühlelementen (22) versehenen Montagekörpers (2b) und/oder zur Entfernung von Dämpfen und/oder frei gesetzten Partikeln dient.

14. Vorrichtung nach einem der Ansprüche 1 - 13, **dadurch gekennzeichnet, dass** Vorrichtungen oder Vorrichtungsteile (4a, 4b, 4f, 4g) vorgesehen sind, mittels denen das zu bearbeitende Element (3; 30; 300) in die zur Bearbeitung vorgesehene Position befördert und dort gehalten werden kann.

15. Vorrichtung nach einem der Ansprüche 1 - 14, **dadurch gekennzeichnet, dass** eine Anlage (100, 101) vorgesehen ist, mittels der die Vorrichtungen oder Vorrichtungsteile (4a, 4b) zur Positionierung und zum Halten des Elementes (3; 30; 300), die Vorrichtungen oder Vorrichtungsteile (7, 8, 10) zum Antrieb des Montagekörpers (2; 5) und/oder des Ringes (6) steuerbar sind.

16. Vorrichtung nach einem der Ansprüche 1 - 15, **dadurch gekennzeichnet, dass** eine Anlage (100, 101) vorgesehen ist, mittels der die Leistung einzelner Laserdioden (1) derart steuerbar ist, dass ringförmige Trennstellen (33e, 33f) oder längsförmige Schlitze (33g) aufgebracht oder hülsen- oder fensterförmige Flächen innerhalb des Isolationsmaterials (32) abgetragen werden können.
